# EUROPEAN PATENT APPLICATION

(11) **EP 1 571 473 A1**
(43) Date of publication of application: **07.09.2005**
(21) Application number: 02786081.6
(22) Date of filing: 10.12.2002
(51) Int. Cl.: G02B 6/36

(54) **FERRULE AND METHOD OF MANUFACTURING THE FERRULE**

(71) Applicant: Croster Industry Co., Ltd., Tokyo 111-0032 (JP)
(72) Inventor: Kono, Yoshinaru, Chuo-ku, Tokyo 104-0061 (JP)
(74) Representative: Vollmann, Heiko
(86) International application number: PCT/JP2002/012935
(87) International publication number: WO 2004/053554

(57) **Abstract**

To provide a ferrule of any desired length while maintaining axial alignment of optical fibers. A plurality of ferrule components 30 having one or two or more fine holes 31 in which an optical fiber 4 is inserted are connected along an insertion direction of the optical fiber 4.

## Description

### TECHNICAL FIELD

The present invention relates to a ferrule of an optical communication connector.

### BACKGROUND ART

Optical fiber communications have already been introduced for relay systems connecting between telephone exchange stations on account of enabling ultrahigh transmission at low costs. Thus, the future introduction of the optical fiber communications in each subscriber's system is being under study. Optical fibers as a transmission medium are connected together in such optical communications to build a network, and terminal ends thereof are connected to modules or terminal devices. An optical communication connector functions to detachably connect the optical fibers etc. The optical communication connector includes: plugs each incorporating a ferrule and inserted face to face; and an adapter having a built-in sleeve allowing the insertion of the plugs from both ends thereof. When the plugs are inserted from both ends of the adapter, the ends of the two ferrules butt against each other inside the sleeve. The optical fibers inserted in the ferrules are aligned and optically connected to each other. Upon this connection, the ferrule incorporated in the connector protects frangible optical fibers and aids in the axial alignment of the optical fibers to prevent an optical loss due to an off-axis arrangement of the optical fibers or gap therebetween.

As mentioned above, in order to enhance the axial alignment accuracy for the optical fibers to thereby prevent an optical loss, it is necessary to align the axes of insertion holes for an optical fiber formed in the ferrule, which requires highly precise polishing of centering the insertion hole with the center of the outer diameter of the ferrule. To explain a specific manufacturing method therefor, first, a mixture of zirconia power and resin is used as a raw material, and the material is molded through injection molding or extrusion molding into a cylindrical member, followed by baking at about 500°C to degrade a resin component and then baking at as high temperature as about 1,200°C to thereby yield a baked member. Subsequently, copper wire such as music wire applied with a diamond abrasive is passed through the cylindrical baked member along its central axis. Then, the inner surface of the insertion hole is polished and in addition, the size of the insertion hole is adjusted. Finally, the outer surface of the ferrule is polished, and the ferrule thus surface-finished is perforated at the center to form optical fiber insertion holes.

However, it is not easy to perforate the ferrule along its central axis to form the optical fiber insertion holes without involving any off-axis misalignment. This polishing is disadvantageously complicated and costs high. In addition, considering the difficulty of such machining, specifications (length and the number of cores) of the ferrule should be made uniform. Hence, there arises a problem in that a variety of ferrules cannot be provided in large volumes.

### DISCLOSURE OF THE INVENTION

The present invention has been made in view of the above-mentioned problems of conventional techniques, and it is therefore an object of the present invention to provide a ferrule capable of maintaining axial alignment of optical fibers with higher accuracy.

In order to achieve the aforementioned object, according to the present invention, an optical communication ferrule for receiving an inserted optical fiber includes a plurality of ferrule components having one or two or more fine holes in which the optical fiber is inserted and connected together along an insertion direction of the optical fiber.

The perforation precision can be further enhanced by forming fine holes in the individual ferrule components to be connected rather than forming the fine hole in the entire ferrule since the perforation depth for each perforation can be made smaller. Hence, the fine holes can be formed so as to exactly pass the center of the outer diameter of the ferrule in a straight line. As a result, the optical fibers to be inserted into the fine holes are aligned with no off-axis portion.

### BRIEF DESCRIPTION OF THE DRAWINGS

- Fig. 1: is a perspective view of a connector including a ferrule according to an embodiment of the present invention.
- Fig. 2(a): shows an example of the ferrule according to the embodiment of the present invention as viewed from an insertion direction of an optical fiber.
- Fig. 2(b): is a side view of the ferrule of Fig. 2(a).
- Fig. 3(a): shows another example of the ferrule according to the embodiment of the present invention as viewed from the insertion direction of the optical fiber.
- Fig. 3(b): is a side view of the ferrule of Fig. 3(a).
- Fig. 4(a): is a side view of an example of a machining device for a ferrule component according to the embodiment of the present invention.
- Fig. 4(b): is a front view of the machining device of Fig. 4(a).

### EMBODIMENT MODE OF THE INVENTION

A ferrule according to the present invention is an optical communication ferrule for receiving an inserted optical fiber, including a plurality of ferrule components having one or two or more fine holes in which the optical fiber is inserted, the ferrule components being connected to each other along an insertion direction of the optical fiber to constitute the ferrule.

In the present invention, the plurality of ferrule components are preferably connected such that the one or two or more fine holes of the ferrule components to be connected are arranged in substantially a straight line.

Further, the one or two or more fine holes in the ferrule components are preferably expanded in a tapered form on at least one ends thereof.

Besides, the ferrule component preferably includes: an adhesive filling recess or protrusion; and an injection groove for injecting an adhesive from the outside to the adhesive filling recess or protrusion, for example, an injection groove communicating with the outside and the recess or protrusion and connecting therebetween.

In addition, the ferrule component preferably includes an engagement portion engaged with a connector housing where the ferrule is set.

Further, the ferrule component preferably contains zirconia ceramics although not particularly limited, and can be formed of stainless steel, hard steel, alloy, a resin material, or other metal or non-metal materials aside from zirconia ceramics. Needless to say, this does not necessarily imply that the same material should be used for all the ferrule components to be connected, and ferrule components made of different materials can be combined and connected.

According to the present invention, the ferrule components having one or two or more fine holes in which the optical fibers are inserted are connected along the insertion direction of the optical fiber to constitute the ferrule. The number of ferrule components constituting the ferrule is not limited, so an arbitrary number of ferrule components are connected into a desired length. Also, the length and shape of the one or two or more ferrule components are not limited. The ferrule components may be uniform or different in length, and the ferrules may have a cylindrical shape, a rectangular-column shape, or other such shape. Further, the number of fine holes for the optical fiber in the ferrule components may be one or two or more. The resulting ferrule may be a single-core, double-core, 4-core, 8-core, 16-core, 32-core, or multi-core ferrule. The arrangement and inter-core pitch of the fine holes can be freely set. In this case, the ferrule components are preferably connected such that the fine holes are arranged in substantially a straight line. Thus, it is possible to obtain a desired ferrule by appropriately combining the ferrule components of various shapes, sizes, and specifications in conformity to specifications such as shapes and sizes of the ferrule.

Also, the perforation precision can be further enhanced by forming the fine holes in the individual ferrule components to be connected rather than forming the fine hole in the entire ferrule since the perforation depth for each perforation can be made smaller. Hence, the fine holes can be formed so as to exactly pass the center of the outer diameter of the ferrule in the straight line. As a result, the optical fibers to be inserted into the fine holes are aligned with no off-axis portion.

In this way, according to the present invention, it is possible to provide a ferrule capable of maintaining the axial alignment of the optical fibers and conformable to various specifications.

A manufacturing method for a ferrule according to the present invention is a manufacturing method for an optical communication ferrule that receives an inserted optical fiber, including perforating in a plurality of ferrule components one or two or more fine holes in which the optical fiber is inserted, and connecting the ferrule components having the fine holes perforated therein such that the fine holes are arranged in substantially a straight line.

According to the present invention, the ferrule component preferably has a width of about 3 mm or smaller, more preferably about 2 mm or smaller along an arranging direction of the perforated fine holes.

According to the present invention, a predetermined number of fine holes of a desired hole diameter are formed in predetermined positions of the ferrule components, and the ferrule components are connected such that the fine holes thereof are arranged in substantially a straight line.

Consequently, a ferrule equivalent to the ferrule according to the present invention can be obtained. Further, the manufacturing method of the present invention can reduce the perforation depth in the step of perforating the fine holes for optical fibber, whereby it is possible to appropriately change the number of fine holes, and their arrangement or size while keeping the perforation precision high. Hence, a high-performance ferrule capable of maintaining the axial alignment of the optical fibers with high precision and conformable to various specifications can be manufactured at low costs.

### BEST MODE FOR CARRYING OUT THE INVENTION

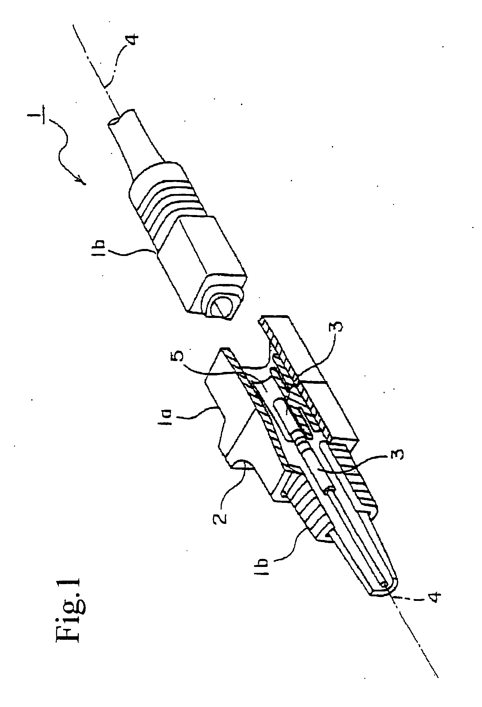

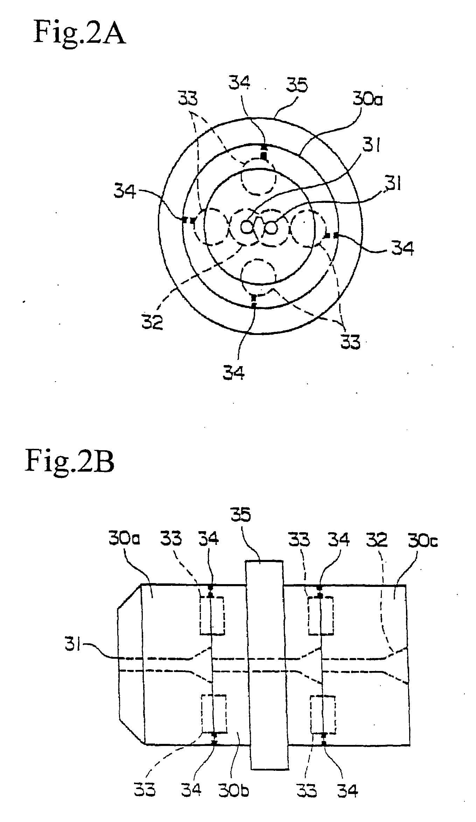

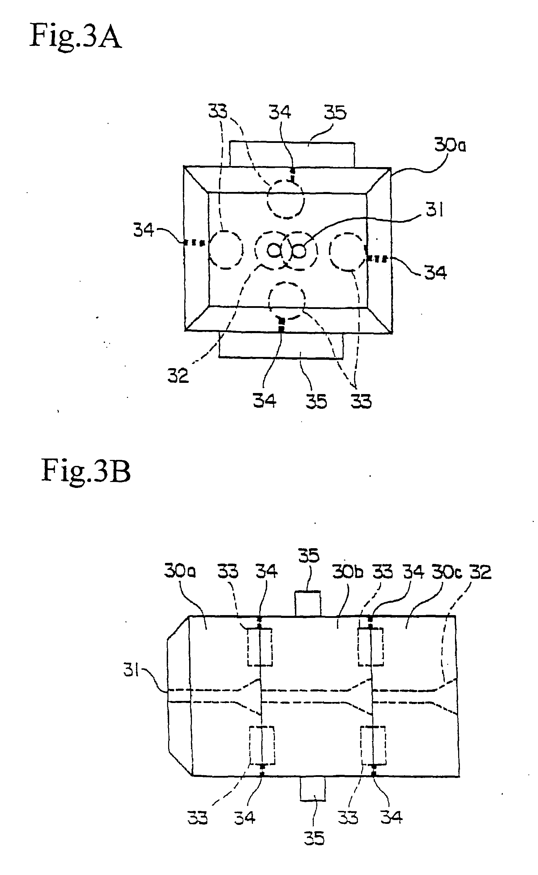

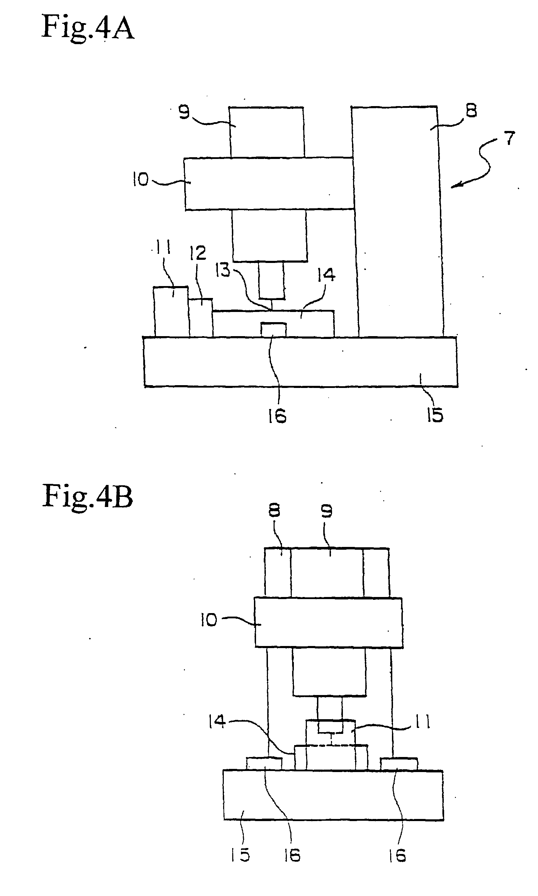

Hereinafter, an embodiment of the present invention will be described with reference to the drawings. Fig. 1 is a perspective view of a connector including a ferrule according to this embodiment. Figs. 2 show the ferrule according to this embodiment. Figs. 3 show another example of the ferrule according to this embodiment. Figs. 4 show a machining device for a ferrule component.

Referring to Figs. 1 to 3, a ferrule 3 according to this embodiment is first described. Fig. 1 shows a connector 1 having the ferrule 3 incorporated therein, and illustrates arrangement of the ferrules 3 for connection in the optical communications.

A network built of optical fibers 4 is connected with individual computers, communication apparatuses, and other terminal devices. The connector 1 including detachably attachable adapter 1 a and plug 1 b functions to establish such connections.

The connector 1 of Fig. 1 includes two plugs 1b having the ferrules 3 incorporated therein, and the adapter 1a having a built-in sleeve 5 allowing insertion of the plugs 1 b from both ends. When the plugs 1 b are inserted from both ends of the adapter 1 a, the ends of the two ferrules 3 butt against each other inside the sleeve 5 by the action of an elastic member (not shown) built in the adapter 1a, whereby the optical fibers 4 in the ferrules 3 are arranged in a straight line, and information is transmitted through the connector 1. An optical loss results from the off-axis arrangement of the butting ferrules 3 or gaps therebetween. To avoid such losses, the ferrules 3 are required to have the functions of supporting the ends of the optical fibers 4 such that the two optical fibers 4 are connected straight as well as protecting the optical fibers 4 as an information transmission medium.

Referring next to Figs. 2 and 3, the ferrule 3 having a characteristic structure is described. The ferrule 3 according to this embodiment is illustrated in Figs. 2 and 3; the ferrule 3 has a cylindrical shape in Figs. 2 and a rectangular-column shape in Figs. 3. These are the same in basic structure and hence, this embodiment is described centering on the ferrule of Figs. 2.

Fig. 2(a) shows the ferrule 3 as viewed from the insertion direction of the optical fiber 4, and Fig. 2(b) is a side view of the ferrule 3.

As shown in Fig. 2(a), the ferrule 3 is a double-core one. Two fine holes 31 are formed along the insertion direction of the optical fiber 4. A tapered peripheral portion 32 surrounds each fine hole 31 and forms a surface sloping toward the fine hole 31. Also, provided around the periphery of the ferrule 3 are adhesive filling portions 33 filled with an adhesive for reinforcing the connection between ferrule components 30, and an engagement portion 35 adapted to engage with a connector housing 2 that is omitted from Figs. 2. The engagement portion 35 is structured in conformity to the structure of the connector housing 2 and thus its shape is not particularly limited.

When viewed from the side, the ferrule 3 according to this embodiment is structured by connecting three ferrule components 30a, 30b, and 30c as shown in Fig. 2(b). There is no particular limitation on materials for each ferrule component 30, and the ferrule components can be formed of stainless steel, hard steel, alloy, a resin material, or other metal or non-metal materials. Note that, the ferrule 3 butts against the other ferrule 3 when in use, so if the two ferrules 3 are different in hardness, lower-hardness one of the two may be cracked (broken). Hence, it is preferable to select a material according to the hardness of the other ferrule 3 to be connected. For example, when the other ferrule 3 to be connected contains zirconia ceramics, a material having an equivalent same zirconia ceramics content is preferably selected. Here, the ferrule components 30 (30a, 30b, and 30c) to be connected may be formed of different materials. In this embodiment, out of the ferrule components, only the ferrule component 30a to butt against the other ferrule is formed of zirconia ceramics, while the remaining ferrule components 30b and 30c are formed of a resin material. With this structure, the hardness of the butting portion between the ferrules 30 can be held high and in addition, the total cost of the ferrule 3 can be lowered.

A process material for each ferrule component 30 first undergoes precision polishing into a smooth surface with an unevenness tolerance of 0.002 mm or smaller. At this time, the surface roughness Ra is preferably 0.05 or more. If the ferrule 3 has a cylindrical shape, that is, if each ferrule component 30 has a circular shape, its diameter is set to about 1.0 mm to 3.0 mm. The entire length thereof ranges about 200 mm to 1,000 mm. Then, the process material is sliced into each ferrule component 30. The width of each ferrule component 30 along the insertion direction of the optical fiber 4 is preferably 3 mm or smaller, more preferably 2 mm or smaller for facilitating the perforation process. This width is preferably determined as appropriate according to the diameter and hardness of the ferrule, and the diameter of the fine holes 31 to be formed. Accordingly, in this embodiment, the width of the ferrule component 30a made of zirconia ceramics is set to 2 mm or smaller from the viewpoint of perforation precision. The resin-made ferrule components 30b and 30c are designed to have a width of 2 mm or more. In slicing the process material, considering the subsequent polishing process, it is preferable to slice the material into the ferrule components 30 with a margin of about 0.003 mm allowed for their predetermined widths. In this way, the ferrule components 30 different in length are used in combination, thus providing the ferrule 4 of a desired length. At this time, lengths of the resin-made ferrule components 30b and 30c are variously set, whereby the total cost of the ferrule 4 can be lowered while the ferrule 4 of any desired length can be obtained.

The sliced ferrule components 30 undergo precision polishing again into a prescribed size, followed by perforation with a machining device. In this embodiment, the ferrule component 30a made of a material containing zirconia ceramics is perforated to form the fine hole 31 having a diameter of 0.125 mm + 0.001 mm = 0.126 mm or less. The resin-made ferrule components 30b and 30c are perforated to form the fine hole 31 having a diameter of 0.125 mm + 0.075 mm = 0.200 mm. Besides, the number of the optical fibers 4 may be one or two or more. Thus, the fine holes 31 may be formed in a corresponding number to produce a single-core, double-core, 4-core,..., or 32-core ferrule, for example.

Further, the fine holes 31 have the tapered peripheral portion 32 on at least one ends. There is a possibility that the ferrule components 30 involving even a slight off-axis portion make it impossible to arrange the fine holes 31 straight with accuracy because of their extremely small hole diameter. Further, the optical fiber 4 is frangible and thus may be damaged by even a small impact. In this embodiment, the ends of the fine holes 31, which are aligned straight when the ferrules 3 are connected to each other, are tapered so as to expand at each position of the junction between the ferrule components 30. With this structure, when the optical fiber 4 inserted into the fine hole 31 is to be inserted into the fine hole 31 of the adjacent ferrule component 30, the optical fiber is inserted into the widely open end of the fine hole 31, whereby the tip end of the optical fiber 4 is guided to the center of the fine hole 31 along the slope forming a tapered shape whose diameter gradually decreases toward the insertion direction. Hence, the optical fiber 4 can be inserted into the next fine hole 31 of the adjacent ferrule component 30 with no damage.

Next, description is given of means for connecting the ferrule components 30 thus machined. The ferrule components 30 are preferably connected such that the fine holes 31 thereof are arranged in substantially a straight line. In particular, the multi-core ferrule components 30 are preferably first positioned so as not to cause displacement of each fine hole 31, and then engaged and bonded together. To elaborate, the ferrule components 30 are arranged in such a direction as to align the fine holes 31 in substantially a straight line. A music wire is passed through the fine holes 31 and the ferrule components are roughly secured in position and then temporarily caulked with a jig such as caulking and optionally engaged with one another if any engagement portion is provided. Further, the adhesive is filled in the adhesive filling portion 33 through an injection groove 34, and the music wire is removed after the adhesive is solidified and the ferrule components 31 are firmly connected to thereby bring the ferrule 3 to completion.

To give additional explanation about the connection between the ferrule components 30, the ferrule components 30 to be connected preferably have an engagement member or bonding portion that allows engagement with the adjacent ferrule component. In order to form the bonding portion, the adhesive filling recesses or protrusions 33 are preferably formed in each ferrule component 30, with the recesses or protrusions defining the space for filling the adhesive when the ferrule components 30 are arranged side by side. In this embodiment, the adhesive filling portions 33 for filling the adhesive used for bonding the adjacent ferrule components 30 are provided. The adhesive filling portions 33 are recesses formed at the interface between the ferrule components 30 (interface with the other ferrule component); when the components are connected together, the recesses face each other to thereby define a space, and the adhesive is injected into the space and functions to reinforce the connection between the adjacent ferrule components 30. For injecting the adhesive from the outside, the injection grooves 34 communicating with each adhesive filling portion 33 are formed in this embodiment. This groove may be formed in either one of the adjacent ferrule components (30a and 30b), (30b and 30c). Alternatively, the groove may be formed therebetween. The injection grooves 34 communicate with the adhesive filling portions 33 from an injection port through which the adhesive is injected, and further with the outlet. The adhesive injected from the injection port fills the adhesive filling portion 34 and then flows toward the outlet. It is judged from the adhesive exuding from the outlet that the adhesive filling portion 34 has been filled up with the adhesive. Thereafter, the whole is fixed and the adhesive is left to solidify. This enables the external injection of the adhesive and connection between the ferrule components 30 without adversely affecting the optical fiber inside the ferrule 4.

As mentioned above, according to this embodiment, by combining the ferrule components 30 as appropriate, the ferrule 3 conforming to desired specifications can be obtained, and the material for the ferrule components 30 can be selected on a per-component basis, resulting in cost reduction of the ferrule 3. Further, the ferrule 3 is divided into the ferrule components 30, and the machining is effected not on the entire ferrule 3 but on each ferrule component 30, whereby the perforation depth can be made short, and the number of fine holes to be formed, the inter-core pitch, the core diameter, etc. can be variously changed to thereby provide the ferrules 3 conforming to various specifications while maintaining the machining accuracy.

Note that as mentioned above, the ferrule 3 of Figs. 3 is the same as that of Figs. 2 except that its shape is a rectangular-column shape, and hence repetitive description thereof is omitted here.

Next, referring to Figs. 4, a machining device 7 for the ferrule 3 according to this embodiment is described. Fig. 4(a) is a side view of the machining device 7, and Fig. 4(b) is a front view of the machining device 7.

As shown in Figs. 4(a) and 4(b), the machining device 7 has a vibration absorption base 15 as a base, and a column 8 standing substantially upright on the base and supporting a motor holding plate 10 that holds a motor 9. A cutting tool 13, which perforates the target material by means of torque transmitted from the motor 9, is used to form the fine holes 31 in the ferrule components 30. A work 14 is held by a work chuck 16 placed on the upper surface of the vibration adsorption base 15. The original position (set position) of the work 14 is determined based on information on positions measured with an optical sensor 11, and a dog chunk 12 holds the work 14 in an appropriate position. After the work 14 to be machined (ferrule component 30) is set, the cutting tool 13 perforates the work with submicron-order precision. In this embodiment, an NC machine tool is adopted as the machining device 7. The use of the NC machine tool enables the position or number (core number) of the fine holes 31 to be appropriately set only by inputting numerical values.

The machining of the ferrule components 30 with the machining device 7 is basically the same as the aforementioned machining of the ferrule components 30. That is, a cylindrical or rectangular-column molded product prepared through the extrusion molding or the like is polished with a surface polishing device (not shown) and sliced with a slicer composed of a diamond blade, followed by polishing the sliced surfaces down to the length corresponding to a desired width of the ferrule components 30. The polished ferrule components 30 are placed on the machining device 7 and perforated so as to allow the fine holes 31 to be formed in the vertical direction. Although depending on the specifications of the machining device 7, when perforated to form the fine holes 31 having a diameter of 0.125 mm, the ferrule components 30 preferably have a thickness (in the perforation direction) of 3 mm or smaller, particularly preferably 2 mm or smaller, with which the off-axis misalignment of the fine holes 31 is minimized. After the fine holes 31 are formed, the edges of the fine holes 31 are ground and tapered to define the tapered peripheral portion 32 and in addition, form the adhesive filling portion 33 and the injection groove 34.

The ferrule components 30 thus obtained are combined into a desired length as discussed above, the music wire is passed through the fine holes 31 to align the connected components, roughly secure them in position with a jig, bond them with each other, and connect the ferrule components 30 to complete the ferrule 3.

The aforementioned embodiment is given to facilitate the understanding of the present invention and not intended to limit the present invention. Accordingly, the elements and numeric values listed in the above embodiment allow any design change and equivalent within the technical scope of the present invention.

## Claims

1. An optical communication ferrule for receiving an inserted optical fiber, comprising a plurality of ferrule components having one or two or more fine holes in which the optical fiber is inserted, the ferrule components being connected with one another in an insertion direction of the optical fiber.

2. The ferrule according to claim 1, wherein the plurality of ferrule components are connected such that the one or two or more fine holes of the ferrule components to be connected are arranged in substantially a straight line.

3. The ferrule according to claim 1 or 2, wherein the one or two or more fine holes of the ferrule components are expanded in a tapered form on at least one ends thereof.

4. The ferrule according to claim 1 or 2, wherein the ferrule component has an adhesive filling recess or protrusion, and an injection groove for injecting an adhesive from the outside to the adhesive filling recess or protrusion.

5. The ferrule according to claim 1 or 2, wherein the ferrule component has an engagement portion engaged with a connector housing in which the ferrule is set.

6. The ferrule according to claim 1 or 2, wherein the ferrule component contains zirconia ceramics.

7. An optical communication ferrule for receiving an inserted optical fiber, comprising a plurality of ferrule components having one or two or more fine holes in which the optical fiber is inserted, wherein:
- the one or two or more fine holes of the ferrule components are expanded in a tapered form on at least one ends thereof; and
- the ferrule components are connected to one another along an insertion direction of the optical fiber.

8. The ferrule according to claim 7, wherein the ferrule component has an adhesive filling recess or protrusion, and an injection groove for injecting an adhesive from the outside to the adhesive filling recess or protrusion.

9. The ferrule according to claim 7 or 8, wherein the ferrule component has an engagement portion engaged with a connector housing in which the ferrule is set.

10. The ferrule according to claim 7 or 8, wherein the ferrule component contains zirconia ceramics.

11. A manufacturing method for an optical communication ferrule that receives an inserted optical fiber, comprising:
- perforating in a plurality of ferrule components one or two or more fine holes in which the optical fiber is inserted; and
- connecting the ferrule components having the fine holes perforated therein such that the fine holes are arranged in substantially a straight line.

12. The manufacturing method for an optical communication ferrule according to claim 11, wherein the ferrule component has a width of about 3 mm or smaller along an arranging direction of the perforated fine holes.
